# EUROPÄISCHE PATENTSCHRIFT

(11) **EP 1 121 782 B1**
(45) Veröffentlichungstag und Bekanntmachung des Hinweises auf die Patenterteilung: **22.10.2003**
(21) Anmeldenummer: 99953616.2
(22) Anmeldetag: 27.08.1999
(51) Int. Cl.: H04L 12/00

(54) **Verfahren zur Datenübertragung**
Data transmission method
Procédé de transmission de données

(30) Priorität: 16.10.1998 DE 19847777
(43) Veröffentlichungstag der Anmeldung: 08.08.2001
(73) Patentinhaber: ROBERT BOSCH GMBH, 70442 Stuttgart (DE)
(72) Erfinder: RADIMIRSCH, Markus, D-30880 Laatzen (DE)
(86) Internationale Anmeldenummer: DE9902685
(87) Internationale Veröffentlichungsnummer: WO00024158

(56) Entgegenhaltungen:
- GIBSON: "The Mobile Communications Handbook" 1999 , SPRINGER VERLAG , HEIDELBERG XP002135405ISBN: 3-540-64836-4 Tabelle 27.2
- BRADNER; MANKIN: "The Recommandation for the IP Next Generation Protocol" [Online] Januar 1995 (1995-01) , IETF XP002135406 Retrieved from the Internet: <URL: http://hlapic.srce.hr/cgi-bin/rfc/rfc1752. txt> [retrieved on 2000-04-10] Seite 22, Zeile 15 - Zeile 30 Absatz [12.1] - Absatz [12.2.1]
- GIBSON: "The Mobile Communications Handbook, Seiten 401 bis 402", 1996, SPRINGER VERLAG, HEIDELBERG

## Beschreibung

Die Erfindung betrifft eine Einrichtung zur Datenübertragung auf einem gemeinsamen Medium mit einer Zentrale und einer Vielzahl von Teilnehmern, die durch Übersendung von Datenpaketen von der Zentrale zu den Teilnehmern (Downlink) und von den Teilnehmern zur Zentrale (Uplink) steuerbar ist. Ein Verfahren, das auf einer solchen Einrichtung basiert, wurde bereits in der nicht vorveräffentlichten deutschen Patentanmeldung DE 19726120A [1] vorgeschlagen. Dort übernimmt die Zentrale koordinierende Funktion für den Medienzugriff über einen protokollorientierten Übertragungsrahmen, dort mit Signalisierungsperiode bezeichnet. In diesem Übertragungsrahmen sind neben den Nutzsignaldatenphasen Signalisierungsdatenphasen für den Uplink und Downlink untergebracht.

Das Verfahren nach [1] hat die Eigenschaft, daß die Position der Downlink-Signalisierung in der vorangegangenen Downlink-Signalisierung angekündigt wird. Bei diesem Verfahren besteht das Problem, daß ein Teilnehmer (Terminal), der sich in den Kommunikationsprozess einklinken möchte, keinerlei Vorabinformation über die Position der Downlink-Signalisierung (Broadcast Channel, BCH) hat. Es ist daher notwendig, daß dieses Terminal solange den Übertragungskanal demoduliert, bis es einen BCH gefunden und die Information über die Lage des nächsten BCH demoduliert hat. Der Zugriff auf den Übertragungskanal kann damit erst im darauf folgenden Übertragungsrahmen erfolgen.

Das Dokument [4] zeigt Beispiele logischer Kanäle bei GSM.

### Vorteile der Erfindung

Mit den Maßnahmen der Erfindung gemäß den Patentansprüchen ist ein schneller Zugriff auf den Übertragungskanal möglich. Durch die Aufteilung in auf die Zentrale bezogene und protokollbezogene Signalisierungsdatenphasen für den Downlink ist eine flexible Positionierung dieser beiden Signalisierungsdatenphasen an unterschiedlichen Stellen des Übertragungsrahmens möglich. Dies gestattet die vollständige Nutzung der angebotenen Übertragungskapazität insbesondere für den Fall, daß die DL-PDUs (Downlink Protocol Data Units) aus verschieden großen Elementen unterschiedlicher Länge zusammengesetzt sind. Bei konstanter Position des BCH könnte es passieren, daß durch die flexible Dauer der DL-PDUs nicht die gesamte Dauer zwischen Beginn des Übertragungsrahmens und der protokollbezogenen Signalisierungsdatenphase mit Nutzdaten gefüllt werden kann. Somit würde Übertragungskapazität verschenkt werden.

### Zeichnungen

Anhand der Zeichnungen werden Ausführungsbeispiele der Erfindung näher erläutert. Es zeigen
Fig. 1 ein Kommunikationsnetz mit einer Zentrale und über ein gemeinsames Medium angeschlossenen Teilnehmern,
Fig. 2 die grundsätzliche Struktur eines Übertragungsrahmens, von dem die Erfindung ausgeht,
Fig. 3 ein Beispiel für einen Übertragungsrahmen nach der Erfindung,
Fig. 4 einen Übertragungsrahmen mit Kennungen vor der protokollbezogenen und der auf die Zentrale bezogenen Signalisierungsdatenphase,
Fig. 5 einen Übertragungsrahmen mit direkter Kennung nur vor der protokollbezogenen Signalisierungsdatenphase,
Fig. 6 einen Übertragungsrahmen mit einer Kennung direkt vor der auf die Zentrale bezogenen Signalisierungsdatenphase.

### Beschreibung von Ausführungsbeispielen

Bevor auf die eigentliche erfindungsgemäße Lösung eingegangen wird, werden zuvor einige Voraussetzungen erläutert.

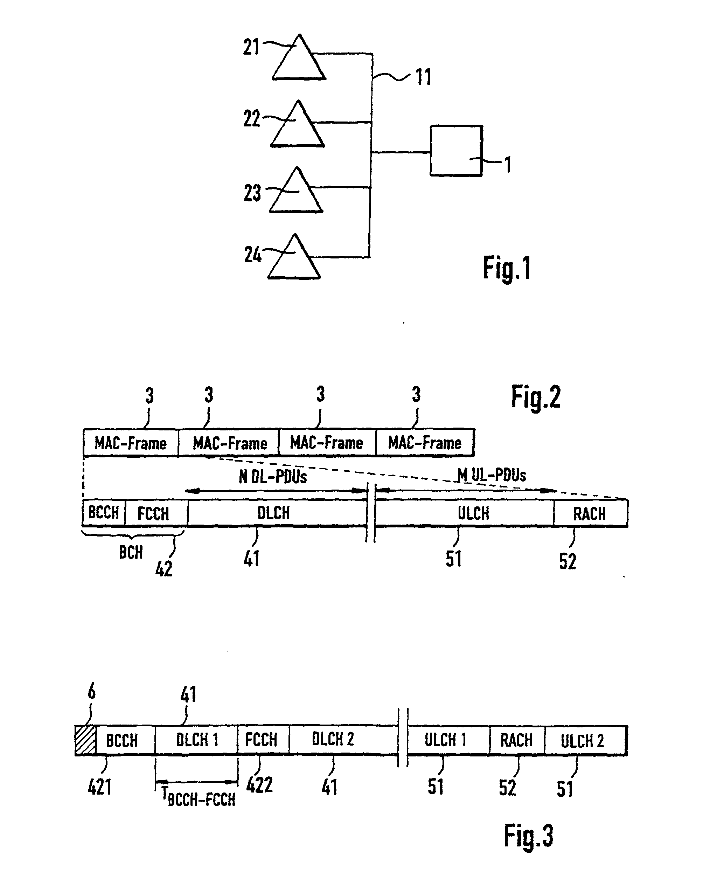

Fig. 1 zeigt ein Kommunikationsnetz für ein Kommunikationssystem. Eine Zentrale 1 kommuniziert über ein gemeinsames Übertragungsmedium 11 mit Teilnehmern 21, 22, 23,... in Form von Terminals, wobei die Zentrale 1 koordinierende Funktion für den Medienzugriff (Medium Access Control, MAC) auf das gemeinsam genutzte Medium wahrnimmt. Es ist dabei möglich, daß die Zentrale 1 an ein darüberliegendes Netz angeschlossen ist, sodaß Terminals miteinander und mit anderen Teilnehmern des Netzes in Verbindung treten können. Es besteht aber auch die Möglichkeit, daß die Zentrale 1 nicht mit einem Netz verbunden ist, sodaß die Terminals nur mit der Zentrale 1 und untereinander kommunizieren können. Dabei ist unerheblich, ob Verkehr immer über die Zentrale 1 geleitet wird oder direkt zwischen Terminals unter Koordinierung der Zentrale 1 ausgetauscht werden können. Das gemeinsam genutzte Übertragungsmedium 11 ist beispielsweise ein Funkkanal, kann aber auch ein PON (passives optisches Netz) oder ein HFC-Netz (Hybrid Fiber Coax) sein.

In Fig. 2 ist die Struktur eines Übertragungsrahmens für das in Fig. 1 dargestellte Kommunikationsnetz aufgezeigt. Die Übertragungsrahmen 3 sind hier mit MAC-Frame bezeichnet ,im Gegensatz zu [1] oder [2], wo sie mit Signalisierungsperiode bezeichnet sind. Zu Beginn eines Übertragungsrahmens 3 erscheint die Downlink-Signalisierungsdatenphase 42 - BCH (Broadcast Channel). Daran schließt sich die Nutzsignaldatenphase 41 für den Downlink an. Sie ist mit DLCH (Downlink Channel) bezeichnet und besteht aus N Nutzdatenzeitschlitzen für die DL-PDUs (Downlink Protocol Data Units). Entsprechend sind für die Nutzsignaldatenphase 51 des Uplink ULCH (Uplink Channel) M-Nutzdatenzeitschlitze für die UL-PDUs (Uplink Protocol Data Units) vorgesehen. Die Uplink Signalisierungsdatenphase 52 ist mit RACH (Random Access Channel) bezeichnet.

Die Downlink-Signalisierungsdatenphase BCH ist wie in Fig. 2 dargestellt in zwei Kategorien aufgeteilt, nämlich in eine auf die Zentrale bezogene Signalisierungsdatenphase 421 - BCCH (Broadcast Control Channel) - und eine protokollbezogene Signalisierungsdatenphase 422 - FCCH (Frame Control Channel). Im BCCH 421 kann die Zentrale 1 Informationen an die Terminals weitergeben, die eher von globaler Relevanz für die Zentrale 1 und die Kommunikation mit den verbundenen Terminals sind. Dazu gehören Informationen wie die Fähigkeiten (Capability) der Zentrale, Herstellerinformationen, aktuelle Betriebsmodi und Adresse der Zentrale. Der FCCH 422 hingegen bestimmt den Aufbau und Inhalt des restlichen Übertragungsrahmens 3 (MAC-Frame). Somit hat der FCCH eher lokale, auf den MAC-Frame bezogene Bedeutung. In Fig. 2, die nur das Prinzip des Rahmenaufbaus zeigen soll, sind der BCCH und der FCCH unmittelbar hintereinander dargestellt, ohne die erfindungsgemäßen Lösungen für den Rahmenaufbau zu berücksichtigen, die nachfolgend erläutert werden.

Es soll zunächst angenommen werden, daß die Position des BCCH, der die globalen Informationen enthält, immer am Anfang des MAC-Frames 3 liegt. In diesem Fall ist es günstig, wenn die Position des FCCH 422 im BCCH 421 angekündigt wird. Desweiteren kann es günstig sein, wenn über die Kennung am Anfang des MAC-Frames 3 hinaus(vgl. [1] und [3]) eine spezielle Kennung direkt vor dem Auftreten des FCCH 422 ausgesendet wird. Es ist günstig, wenn diese Kennung sich von der Kennung am Beginn des MAC-Frames 3 unterscheidet, kann aber grundsätzlich auch die Gleiche sein.

Ein beispielhafter MAC-Frame 3 für eine Einrichtung nach der Erfindung ist in Fig. 3 dargestellt. Der MAC-Frame 3 beginnt mit einer Kennung 6, die eindeutig erkennen läßt, daß hier der Beginn des MAC-Frames ist. Ein Beispiel für eine solche Kennung ist z. B. in [1] beschrieben. Es folgt die Signalisierungsdatenphase 421 - BCCH - in der unter anderem der zeitliche Abstand (indirekte Kennung) zwischen BCCH und FCCH - T Index (BCCH - FCCH) - enthalten ist. Diese Information wird von den Terminals 21, 22, 23,... ausgewertet, so daß bei Bedarf der FCCH gezielt demoduliert werden kann.

Dazu müssen zeitliche Bezugspunkte festgelegt werden, die im Beispiel gemäß Fig. 3 das Ende des BCCH und der Beginn des FCCH sind. Es ist genauso gut möglich, daß die zeitliche Referenz des BCCH der Beginn oder ein Zeitpunkt in der Mitte des BCCH oder gar die Kennung ist. Der Referenzzeitpunkt des FCCH könnte alternativ auch am Anfang oder irgendwo in der Mitte des FCCH liegen. Dabei ist es möglich, daß ein Terminal diesen zeitlichen Abstand T Index (BCCH - FCCH) vom Hersteller fest vorgegeben bekommt. Die Festlegung dieses Abstandes kann aus herstellerspezifischen Überlegungen oder auch aus einem Standard abgeleitet sein.

Eine weitere Möglichkeit ist ein flexibler Abstand T Index (BCCH - FCCH), der je nach den Erfordernissen der jeweiligen Situation von der Zentrale 1 berechnet wird und den Terminals mitgeteilt wird. Die Übertragung des aktuellen Abstandes kann im BCCH an die Terminals erfolgen. Dies begünstigt, daß der ganze DLCH 1 (Downlink Nutzdatensignalpahse 41) gefüllt werden kann, wenn, wie zuvor erläutert, die Länge der DL-PDUs nicht konstant ist und aus Elementen verschiedener Dauer zusammengesetzt wird.

Die Granularität dieses Zeitabstandes kann in Systemtakten gemessen werden, wobei dieser Systemtakt im allgemeinen in einem Standard festgeschrieben werden muß. Eine weitere Möglichkeit ist die explizite Festschreibung einer zeitlichen Granularität, die z. B. der Dauer der kleinsten Einheit, aus der eine DL-PDU zusammengesetzt werden kann, entsprechen kann. Wesentlich daran ist, daß diese zeitliche Granularität ein gemeinsamer Teiler der Dauern aller möglicher DL-PDUs ist. Die Funktion des FCCH ist in [1] und [2] vollständig beschrieben; er teilt den Terminals Zeitschlitze für Empfang und Sende zu. Auch die zeitliche Abfolge der einzelnen Elemente eines MAC-Frames 3 sowie die Auswirkungen des FCCH sind dort festgehalten. Ein Terminal, das sich neu anmelden will, kann sich aus der Kenntnis des FCCH die zeitliche Lage der restlichen Elemente des MAC-Frames 3 und natürlich auch des RACH ausrechnen und mit dessen Hilfe in Kommunikation mit der Zentrale treten.

Nachfolgend werden noch weitere Ausgestaltungsmöglichkeiten der Erfindung vorgestellt:

Die Position des BCCH 421 ist nicht direkt am Anfang des MAC-Frames 3, sondern hat einen konstanten Abstand vom Beginn des MAC-Frames.

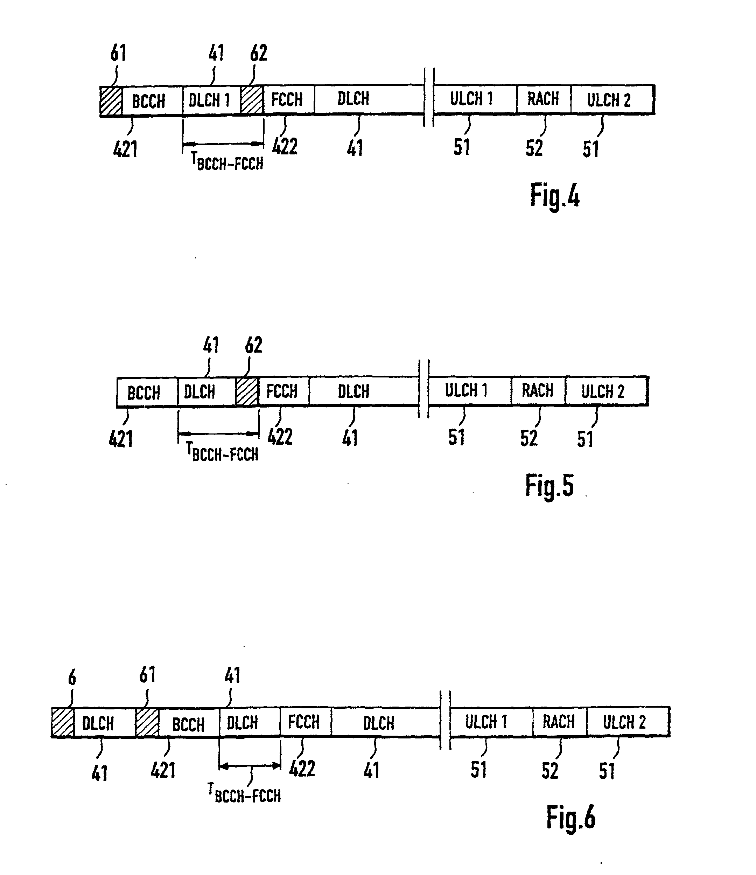

Es ist zudem möglich, die Position des FCCH 422 durch eine zusätzliche Kennung zu kennzeichnen. In diesem Fall gibt es die folgenden Kombinationsmöglichkeiten:
- vor dem FCCH 422 wird eine zusätzliche Kennung 62 versendet, die idealerweise im Empfänger von der Kennung 61 vor dem BCCH 421 unterschieden werden kann. Hierbei ist es sowohl möglich, daß der FCCH 422 im BCCH 421 angkündigt wird, als auch daß der BCCH 421 die Position des FCCH 422 ankündigt. Dies ist in Fig. 4 dargestellt.
- vor dem BCCH 421 wird keine Kennung eingefügt, so daß die Kennung 62 vor dem FCCH 422 einzigartig ist und die Position des FCCH 422 eindeutig gekennzeichnet. Auch in diesem Fall kann im BCCH 421 der FCCH 422 angekündigt werden oder nicht. Dies ist in Fig. 5 abgebildet.

Wenn die Position des BCCH 421 nicht am Anfang des MAC-Rahmens 3 liegt, der mit der Kennung 6 als Rahmenkennung versehen ist, kann es vorteilhaft sein, eine zusätzliche Kennung 61 direkt vor dem BCCH 421 auszusenden, die leicht zu detektieren ist. Dies ist in Fig. 6 dargestellt. Auch hier gibt es die Möglichkeit, eine weitere Kennung vor dem FCCH 422 einzufügen, wobei die Kennung 61 vor dem BCCH 421 vorhanden sein kann oder weggelasen werden kann.

### Literatur:

[1] Deutsche Patentanmeldung DE 19726120A,
[2] A. Krämling et al., "Performance Evaluation of MAC schemes for wireless ATM systems with centralised control considering processing delays, EPMCC, Bonn, 1997
[3] Karsten Brüninghaus, Markus Radimirsch, "Coarse Frame Synchronisation for OFDM based Wireless Communication Systems", PIMRC, Boston, 1998
[4] GIBSON: "The Mobile Communications Handbook", 1996, CRC Press, Boca Raton, Seiten 401 bis 402

## Patentansprüche

1. Verfahren zur Übertragung von Daten auf einem gemeinsamen Medium mit einer Zentrale (1) und einer Vielzahl von Teilnehmern (21, 22, 23,...), wobei Datenpakete von der Zentrale (1) zu den Teilnehmern (21, 22, 23, ...), Downlink, und von den Teilnehmern (21, 22, 23,...) zur Zentrale (1), Uplink, gesendet werden, wobei die Zentrale (1) koordinierende Funktion für den Medienzugriff über einen protokollorientierten Übertragungsrahmen wahrnimmt und wobei ein Übertragungsrahmen (3) neben Mutzsignaldatenphasen (41, 51) Signalisierungsdatenphasen für den Downlink (42) und den Uplink (52) aufweist, mit folgenden Maßnahmen:
- die Signalisierungsdatenphasen für den Downlink (42) werden aufgeteilt in auf die Zentrale bezogene Signalisierungsdatenphasen (421) und protokollbezogene Signalisierungsdatenphasen (422),
- es wird mindestens eine Kennung (6, 61, 62) der zeitlichen Position der protokollbezogenen Signalisierungsdatenphase (422) des Downlink im Übertragungsrahmen (3) vorgesehen,
- diese Kennung (6, 61, 62) der zeitlichen Position der protokollbezogenen Signalisierungsdatenphase (422) des Downlink wird direkt in einer Signalisierungsdatenphase für den Downlink untergebracht.

2. Verfahren zur Übertragung von Daten auf einem gemeinsamen Medium mit einer Zentrale (1) und einer Vielzahl von Teilnehmern (21, 22, 23,...), wobei Datenpakete von der Zentrale (1) zu den Teilnehmern (21, 22, 23, ...), Downlink, und von den Teilnehmern (21, 22, 23, ...) zur Zentrale (1), Uplink, gesendet werden, wobei die Zentrale (1) koordinierende Funktion für den Medienzugriff über einen protokollorientierten Übertragungsrahmen wahrnimmt und wobei ein Übertragungsrahmen (3) neben Nutzsignaldatenphasen (41, 51) Signalisierungsdatenphasen für den Downlink (42) und den Uplink (52) aufweist, mit folgenden Maßnahmen:
- die Signalisierungsdatenphasen für den Downlink (42) werden aufgeteilt in auf die Zentrale bezogene Signalisierungsdatenphasen (421) und protokollbezogene Signalisierungsdatenphasen (422),
- es wird mindestens eine Kennung (6, 61, 62) der zeitlichen Position der protokollbezogenen Signalisierungsdatenphase (422) des Downlink im Übertragungsrahmen (3) vorgesehen,
- diese Kennung (6, 61, 62) der zeitlichen Position der protokollbezogenen Signalisierungsdatenphase (422) des Downlink wird aus einer anderen Kennung (6, 61, 62), die insbesondere für die Position der auf die Zentrale bezogenen Signalisierungsdatenphase (421) vorgesehen ist, abgeleitet.

3. Verfahren nach Anspruch 1 oder 2, **dadurch gekennzeichnet, daß** in der auf die Zentrale bezogenen Signalisierungsdatenphase (421) zur indirekten Kennung der protokollbezogenen Signalisierungsdatenphase (422) eine Ankündigung der Position letzterer vorgesehen wird, indem diese Ankündigung insbesondere den zeitlichen Abstand zur protokollbezogenen Signalisierungsdatenphase (422) enthält.

4. Verfahren nach einem der Ansprüche 1 bis 3, **dadurch gekennzeichnet, daß** die teilnehmerbezogene Signalisierungsdatenphase (421) jeweils am Anfang eines Übertragungsrahmens (3) vorgesehen wird.

5. Verfahren nach einem der Ansprüche 1 bis 4, **dadurch gekennzeichnet, daß** unmittelbar vor einer auf die Zentrale bezogenen Signalisierungsdatenphase (421) eine Kennung (6, 61, 62) vorgesehen wird, welche insbesondere auch zur Kennzeichnung des Beginns eines Übertragungsrahmens (3) dient.

6. Verfahren nach einem der Ansprüche 1 bis 3, **dadurch gekennzeichnet, daß** der zeitliche Abstand zwischen einer auf die Zentrale bezogenen und einer protokollbezogenen Signalisierungsdatenphase (421, 422) fest vorgegeben wird.

7. Verfahren nach einem der Ansprüche 1 bis 3, **dadurch gekennzeichnet, daß** der zeitliche Abstand zwischen einer auf die Zentrale bezogenen und einer protokollbezogenen Signalisierungsdatenphase (421, 422) variabel ist und den Teilnehmern (21, 22, 23,...) jeweils von der Zentrale (1) mitgeteilt wird.

8. Verfahren nach einem der Ansprüche 1 bis 7, **dadurch gekennzeichnet, daß** der Zeitraum zwischen einer auf die Zentrale bezogenen und einer protokollbezogenen Signalisierungsdatenphase (421, 422) mit Nutzdaten aufgefüllt wird.

9. Verfahren nach einem der Ansprüche 1 bis 3, **dadurch gekennzeichnet, daß** eine auf die Zentrale bezogene Signalisierungsdatenphase (421) nicht direkt am Anfang eines Übertragungsrahmens (3) vorgesehen wird, sondern vom Anfang eines Übertragungsrahmens insbesondere einen konstanten Abstand aufweist.

10. Verfahren nach einem der Ansprüche 1 bis 9, **dadurch gekennzeichnet, daß** zeitliche Bezugspunkte sowohl für die auf die Zentrale bezogene als auch für die protokollbezogene Signalisierungsdatenphase (421, 422) vorgesehen werden, wobei diese zeitlichen Bezugspunkte entweder am Anfang oder in der Mitte der jeweiligen Signalisierungsdatenphase oder in mindestens einer Kennung liegen.

11. Verfahren nach Anspruch 9 oder 10, **dadurch gekennzeichnet, daß** vor einer auf die Zentrale bezogenen Signalisierungsdatenphase (421) und auch vor einer protokollbezogenen Signalisierungsdatenphase (422) eine Kennung (61, 62) vorgesehen wird, wobei sich diese Kennungen insbesondere voneinander unterscheiden, unabhängig davon, ob die Position der protokollbezogenen Signalisierungsdatenphase (242) in der auf die Zentrale bezogenen Signalisierungsdatenphase (421) angekündigt wird oder nicht.

12. Verfahren nach einem der Ansprüche 1 bis 10, **dadurch gekennzeichnet, daß** nur vor der protokollbezogenen Signalisierungsdatenphase (242) unmittelbar eine Kennung (6, 61, 62) vorgesehen wird, unabhängig davon, ob die Position der protokollbezogenen Signalisierungsdatenphase (242) in der auf die Zentrale bezogenen Siqnalisierungsdatenphase angekündigt wird oder nicht.

13. Verfahren nach einem der Ansprüche 1 bis 12, **dadurch gekennzeichnet, daß** unabhängig von den Kennungen (6, 61, 62) der Signalisierungsdatenphasen eine zusätzliche Kennung des Übertragungsrahmens (3) vorgesehen wird.

## Claims

1. Method for transmitting data on a common medium having a control centre (1) and having a large number of subscribers (21, 22, 23, ...), with data packets being transmitted from the control centre (1) to the subscribers (21, 22, 23, ...), downlink, and from the subscribers (21, 22, 23, ...) to the control centre (1), uplink, with the control centre (1) carrying out a coordinating function for the media access via a protocol-oriented transmission frame, and with a transmission frame (3) having signalling data phases for the downlink (42) and for the uplink (52) in addition to payload signal data phases (41, 51), having the following measures:
- the signalling data phases for the downlink (42) are subdivided into signalling data phases (421) which are related, to the control centre and into protocol-related signalling data phases (422),
- at least one identifier (6, 61, 62) is provided for the timing of the protocol-related signalling data phase (422) for the downlink in the transmission frame (3), and
- this identifier (6, 61, 62) for the timing of the protocol-related signalling data phase (422) in the downlink is accommodated directly in a signalling data phase for the downlink.

2. Method for transmitting data on a common medium having a control centre (1) and having a large number of subscribers (21, 22, 23, ...), with data packets being transmitted from the control centre (1) to the subscribers (21, 22, 23, ...), downlink, and from the subscribers (21, 22, 23, ...) to the control centre (1), uplink, with the control centre (1) carrying out a coordinating function for the media access via a protocol-oriented transmission frame, and with a transmission frame (3) having signalling data phases for the downlink (42) and for the uplink (52) in addition to payload signal data phases (41, 51), having the following measures:
- the signalling data phases for the downlink (42) are subdivided into signalling data phases (421) which are related to the control centre and into protocol-related signalling data phases (422),
- at least one identifier (6, 61, 62) is provided for the timing of the protocol-related signalling data phase (422) for the downlink in the transmission frame (3), and
- this identifier (6, 61, 62) for the timing of the protocol-related signalling data phase (422) for the downlink is derived from another identifier (6, 61, 62), which is provided in particular for the position of the signalling data phase (421) which is related to the control centre.

3. Method according to Claim 1 or 2, **characterized in that**, in the signalling data phase (421) which is related to the control centre for indirect identification of the protocol-related signalling data phase (422), a notification of the position of the latter is provided, by this notification containing in particular the time interval from the protocol-related signalling data phase (422).

4. Method according to one of Claims 1 to 3, **characterized in that** the subscriber-related signalling data phase (421) is in each case provided at the start of a transmission frame (3).

5. Method according to one of Claims 1 to 4, **characterized in that** an identifier (6, 61, 62), which is also used in particular for identification of the start of a transmission frame (3), is provided immediately before a signalling data phase (421) which is related to the control centre.

6. Method according to one of Claims 1 to 3, **characterized in that** the time interval between a signalling data phase (421) which is related to the control centre and a protocol-related signalling data phase (422) is predetermined in a fixed manner.

7. Method according to one of Claims 1 to 3, **characterized in that** the time interval between a signalling data phase (421) which is related to the control centre and a protocol-related signalling data phase (422) is variable, and is in each case signalled from the control centre (1) to the subscribers (21, 22, 23, ...).

8. Method according to one of Claims 1 to 7, **characterized in that** the time interval between a signalling data phase (421) which is related to the control centre and a protocol-related signalling data phase (422) is filled with payload data.

9. Method according to one of Claims 1 to 3, **characterized in that** a signalling data phase (421) which is related to the control centre is not provided directly at the start of a transmission frame (3) but, in particular, is at a constant distance from the start of a transmission frame.

10. Method according to one of Claims 1 to 9, **characterized in that** time reference points are provided both for the signalling data phase (421) which is related to the control centre and for the protocol-related signalling data phase (422), with these time reference points being located either at the start or in the centre of the respective signalling data phase, or in at least one identifier.

11. Method according to Claim 9 or 10, **characterized in that** an identifier (61, 62) is provided before a signalling data phase (421) which is related to the control centre, as well as before a protocol-related signalling data phase (422), with these identifiers differing from one another in particular as a function of whether the position of the protocol-related signalling data phase (422) in the signalling data phase (421) which is related to the control centre has or has not been notified.

12. Method according to one of Claims 1 to 10, **characterized in that** an identifier (6, 61, 62) is provided directly only before the protocol-related signalling data phase (422), irrespective of whether the position of the protocol-related signalling data phase (422) in the signalling data phase which is related to the control centre has or has not been notified.

13. Method according to one of Claims 1 to 12, **characterized in that** an additional identifier for the transmission frame (3) is provided independently of the identifiers (6, 61, 62) for the signalling data phases.

## Revendications

1. Procédé de transmission de données sur un support commun avec une centrale (1) et un grand nombre de participants (21, 22, 23,...), au cours duquel les paquets de données sont envoyés « Downlink » de la centrale (1) vers les participants (21, 22, 23,...) « Uplink »et des participants (21, 22, 23,...) vers la centrale (1), au cours duquel la centrale (1) prend en charge une fonction de coordination pour l'accès au support via un cadre de diffusion orienté protocole et au cours duquel un cadre de diffusion (3), parallèlement aux phases de données du signal utile (41, 51) présente des phases de données de signalisation pour « Downlink » (42) et « Uplink » (52), tout en respectant les mesures suivantes :
- les phases de données de signalisation pour « Downlink » (42) sont réparties dans les phases de données de signalisation (421) de la centrale et les phases de données de signalisation (422) du protocole,
- il y a au moins une détection (6, 61, 62) de la position temporelle de la phase de données de signalisation du protocole (422) de « Downlink » dans le cadre de diffusion (3),
- la détection (6, 61, 62) de la position temporelle de la phase de données de signalisation du protocole (422) de « Downlink » est directement intégrée à une phase de données de signalisation pour « Downlink ».

2. Procédé de transmission de données sur un support commun avec une centrale (1) et un grand nombre de participants (21, 22, 23,...), au cours duquel les paquets de données sont envoyés de la centrale (1) vers les participants (21, 22, 23,...) « Downlink » et des participants (21, 22, 23,...) vers la centrale (1), « Uplink », au cours duquel la centrale (1) prend en charge une fonction de coordination pour l'accès au support via un cadre de diffusion orienté protocole et au cours duquel un cadre de diffusion (3), parallèlement aux phases de données du signal utile (41, 51) présente des phases de données de signalisation pour « Downlink » (42) et « Uplink » (52), tout en respectant les mesures suivantes :
- les phases de données de signalisation pour « Downlink » (42) sont réparties dans les phases de données de signalisation (421) de la centrale et les phases de données de signalisation (422) du protocole,
- il y a au moins une détection (6, 61, 62) de la position temporelle de la phase de données de signalisation du protocole (422) de « Downlink » dans le cadre de diffusion (3),
- la détection (6, 61, 62) de la position temporelle de la phase de données de signalisation du protocole (422) de « Downlink » dérive d'une autre détection (6, 61, 62), particulièrement prévue pour le positionnement de la phase de données de signalisation (421) de la centrale.

3. Procédé selon la revendication 1 ou 2,
**caractérisé en ce que**
dans la phase de données de signalisation (421) de la centrale, une indication de la dernière position est prévue pour assurer une détection indirecte de la phase de données de signalisation (422) du protocole, cette indication contenant en particulier l'intervalle de temps avec la phase de données de signalisation (422) du protocole.

4. Procédé selon l'une des revendications 1 à 3,
**caractérisé en ce que**
la phase de données de signalisation (421) du participant est prévue à chaque début d'un cadre de diffusion (3).

5. Procédé selon l'une des revendications 1 à 4,
**caractérisé en ce que**
immédiatement avant une phase de données de signalisation (421) de la centrale, une détection (6, 61, 62) est prévue et sert en particulier également à **caractériser** le début d'un cadre de diffusion (3).

6. Procédé selon l'une des revendications 1 à 3,
**caractérisé en ce que**
l'intervalle de temps entre une phase de données de signalisation de la centrale et une phase de données de signalisation du protocole (421, 422) est préalablement déterminé.

7. Procédé selon l'une des revendications 1 à 3,
**caractérisé en ce que**
l'intervalle de temps entre une phase de données de signalisation de la centrale et une phase de données de signalisation du protocole (421, 422) est variable et est à chaque fois communiqué aux participants (21, 22, 23,...) à partir de la centrale (1).

8. Procédé selon l'une des revendications 1 à 7,
**caractérisé en ce que**
l'intervalle de temps entre une phase de données de signalisation de la centrale et une phase de données de signalisation du protocole (421, 422) est rempli de données utiles.

9. Procédé selon l'une des revendications 1 à 3,
**caractérisé en ce qu'**
une phase de données de signalisation de la centrale (421) n'est pas prévue dès au début d'un cadre de diffusion (3), mais présente en particulier une distance constante depuis le début d'un cadre de diffusion.

10. Procédé selon l'une des revendications 1 à 9,
**caractérisé en ce que**
les points de référence temporels sont prévus aussi bien pour la phase de données de signalisation de la centrale que pour la phase de données de signalisation du protocole (421, 422), ces points de référence temporels se trouvant soit au début, soit au milieu de chaque phase de données de signalisation ou au moins dans une détection.

11. Procédé selon la revendication 9 ou 10,
**caractérisé en ce qu'**
avant une phase de données de signalisation de la centrale (421) et également avant une phase de données de signalisation du protocole (422), une détection est prévue, ces détections se différenciant en particulier l'une de l'autre indépendamment du fait que la position de la phase de données de signalisation du protocole (422) soit ou non indiquée dans la phase de données de signalisation de la centrale (421).

12. Procédé selon la revendication 9 ou 10,
**caractérisé en ce qu'**
uniquement avant la phase de données de signalisation du protocole (422), une détection (6, 61, 62) est prévue, indépendamment du fait que la position de la phase de données de signalisation du protocole (422) soit ou non indiquée dans la phase de données de signalisation de la centrale.

13. Procédé selon l'une des revendications 1 à 12,
**caractérisé en ce qu'**
indépendamment des détections (6, 61, 62), des phases de données de signalisation, une détection supplémentaire du cadre de diffusion (3) est prévue.
